# EUROPEAN PATENT APPLICATION

(11) **EP 4 545 470 A1**
(43) Date of publication of application: **30.04.2025**
(21) Application number: 23827116.7
(22) Date of filing: 15.06.2023
(51) Int. Cl.: B66C 13/00, B66C 13/12, B66C 13/22, B66C 13/52, B66C 23/42

(54) **CRANE**

(30) Priority: 24.06.2022 JP 2022102121
(71) Applicant: TADANO LTD., Takamatsu-shi, Kagawa 761-0185 (JP)
(72) Inventor: KAWANO, Takashi, Takamatsu-shi, Kagawa 761-0185 (JP); TERATA, Kimihiko, Takamatsu-shi, Kagawa 761-0185 (JP); NAKAMATSU, Shota, Takamatsu-shi, Kagawa 761-0185 (JP)
(74) Representative: MFG Patentanwälte Meyer-Wildhagen Meggle-Freund Gerhard PartG mbB
(86) International application number: PCT/JP2023/022318
(87) International publication number: WO 2023/248930

(57) **Abstract**

This crane comprises a traveling vehicle body that travels through use of a motor driven by a power supply unit, and a first cooling system for cooling the motor, the first cooling system having a plurality of cooling devices that are distributed in the traveling vehicle body and connected in parallel with each other, and that cool a fluid that flows through a circuit of the first cooling system.

## Description

### Technical Field

The present invention relates to a crane.

### Background Art

Patent Literature 1 discloses a mobile crane including a lower traveling body having a traveling function and an upper turning body provided in a turnable state on an upper part of the lower traveling body. The lower traveling body includes an engine and travels based on the power of the engine.

### Citation List

### Patent Literature

Patent Literature 1: JP 2012-96928 A

### Summary of the Invention

### Problems to be Solved by the Invention

In recent years, there has been a demand for motorized cranes as described above from the viewpoint of environmental protection and the like.

An object of the present invention is to provide a crane that can travel by electric power.

### Solutions to Problems

One aspect of a crane according to the present invention is a crane including:
a traveling vehicle body that travels with a motor driven by a power supply unit; and
a first cooling system that cools a lower electric device, in which
the first cooling system includes a plurality of cooling devices dispersedly arranged on the traveling vehicle body, connected in parallel to each other, and configured to cool a fluid flowing through a circuit of the first cooling system.

### Effects of the Invention

According to the present invention, it is possible to provide a crane that can travel by electric power.

### Brief Description of Drawings

Fig. 1 is a schematic view of a mobile crane according to an embodiment.
Fig. 2 is a block diagram schematically illustrating a system configuration of a mobile crane.
Fig. 3 is a perspective view of a crane from which a part of the configuration is omitted.
Fig. 4 is a schematic cross-sectional view illustrating a state in which the periphery of the motor is viewed from the left side.
Fig. 5 is a schematic diagram illustrating a battery periphery as viewed from above.
Fig. 6 is a diagram illustrating a configuration of a lower cooling system.
Fig. 7 is a schematic view illustrating a state in which the cooling device is viewed from behind.
Fig. 8 is a schematic view illustrating a modification of the cooling device.

### Description of Embodiments

Hereinafter, an example of embodiments of a crane according to the present invention will be described in detail based on the drawings. Note that a crane according to the embodiment described below is an example of the crane according to the present invention, and the present invention is not limited to the embodiments described below.

### [Embodiment]

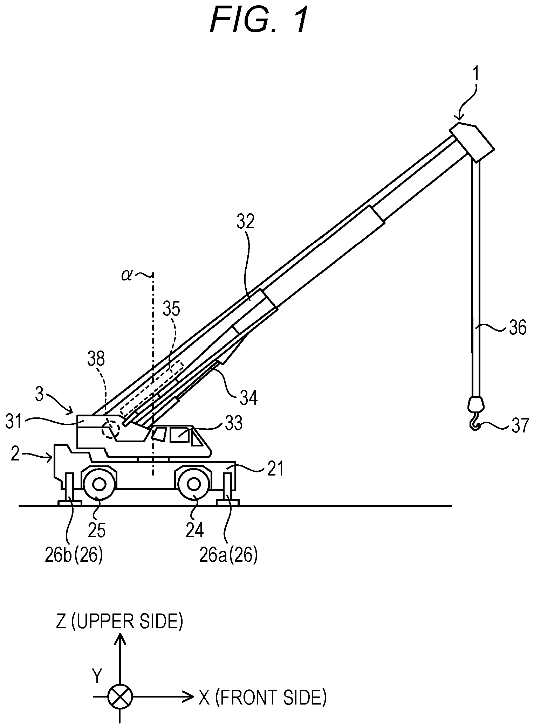

Fig. 1 is a schematic view of a mobile crane 1 (in the illustrated case, rough terrain crane) according to the present embodiment. The mobile crane is, for example, an all-terrain crane, a truck crane, or a loading truck crane (also referred to as a cargo crane). However, the crane according to the present invention may be various cranes.

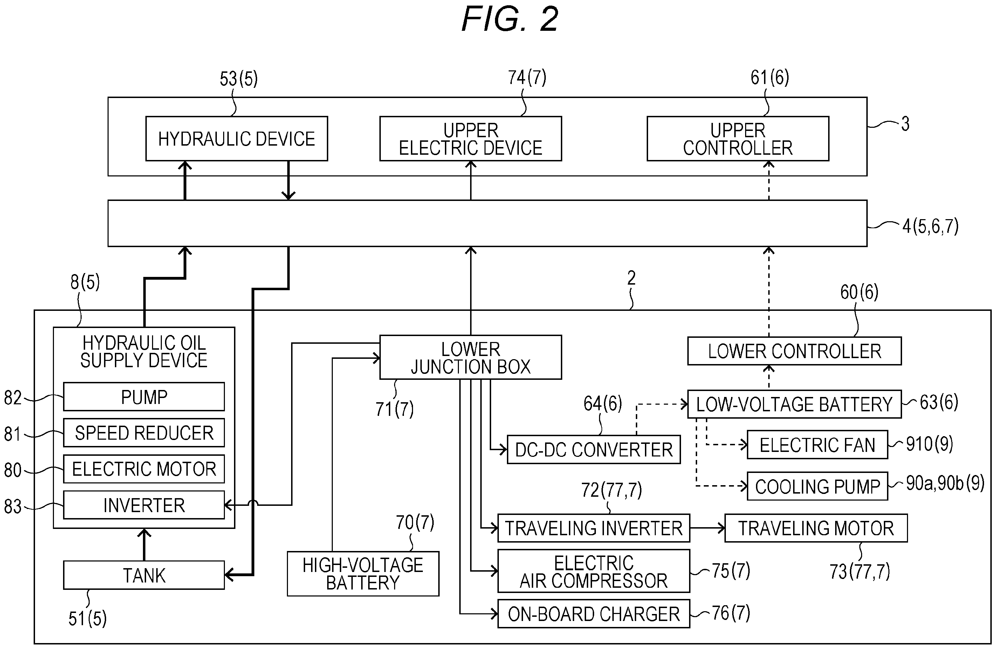

The mobile crane 1 includes a lower traveling body 2 and an upper turning body 3. The mobile crane 1 is an electric crane including a high-voltage battery 70 (see Fig. 2). The mobile crane 1 travels on the basis of the electric power supplied from the high-voltage battery 70. That is, the mobile crane 1 does not include an engine.

In addition, the mobile crane 1 executes an operation other than traveling (for example, crane operations, cooling, and/or heating) based on the electric power supplied from the high-voltage battery 70. The crane operation is, for example, a turning operation and/or a winch operation in a cargo conveyance operation. Hereinafter, a specific configuration of the mobile crane 1 will be described.

First, the configuration of the upper turning body 3 will be described with reference to Fig. 1. Fig. 1 is a schematic diagram of the mobile crane 1. The upper turning body 3 is provided on the upper part of the lower traveling body 2, and can turn about a turning center axis α with respect to the lower traveling body 2. The upper turning body 3 includes a turning base 31, a telescopic boom 32, and a cab 33.

The turning base 31 is supported on the upper part of the lower traveling body 2 via a bearing (not illustrated). The turning base 31 turns based on the power generated by a turning actuator (not illustrated) provided in the upper turning body 3. In the present embodiment, the turning actuator is a hydraulic motor. The motor operates based on supply and discharge of hydraulic oil. The hydraulic oil is supplied from the lower traveling body 2. The turning actuator may be an electric motor. In this case, the electric motor for turning is driven on the basis of the electric power supplied from a high-voltage battery 70 described later.

The telescopic boom 32 is supported by the turning base 31 and has a plurality of telescopically combined booms. The telescopic boom 32 can change the derricking angle based on the power generated by a derricking cylinder 34 (derricking).

The derricking cylinder 34 is a telescopic hydraulic cylinder and is provided in the upper turning body 3. The derricking cylinder 34 operates based on supply and discharge of hydraulic oil. The hydraulic oil is supplied by a hydraulic oil supply device 8 (see Fig. 2) provided in the lower traveling body 2.

The telescopic boom 32 expands and contracts based on the power generated by a telescopic cylinder 35. The telescopic cylinder 35 is a hydraulic cylinder and is provided inside the telescopic boom 32. The telescopic cylinder 35 operates based on supply and discharge of hydraulic oil. Further, the hydraulic oil is supplied by the hydraulic oil supply device 8 provided in the lower traveling body 2.

The telescopic boom 32 supports a wire rope 36. The wire rope 36 hangs down from a distal end of the telescopic boom 32, and a hook 37 is provided at the distal end. A part of the wire rope 36 is wound around a winch 38.

The winch 38 is driven (rotates) based on the power generated by a winch actuator (not illustrated). In the present embodiment, the winch actuator is provided on the turning base 31 and is a hydraulic motor. The motor operates based on supply and discharge of hydraulic oil. The hydraulic oil is supplied by the hydraulic oil supply device 8 provided in the lower traveling body 2.

When the winch 38 rotates, the wire rope 36 is wound up or unwound according to the rotation direction of the winch 38. The motor for winching may be an electric motor. In this case, the electric motor for winching is driven on the basis of the electric power supplied from the high-voltage battery 70 described later.

Next, the lower traveling body 2 will be described with reference to Figs. 1 to 7. In describing the structure of the lower traveling body 2, an orthogonal coordinate system (X, Y, Z) illustrated in each drawing is used. The X direction coincides with the front-rear direction of the lower traveling body 2. The +side in the X direction coincides with the front side of the lower traveling body 2. The -side in the X direction coincides with the rear side of the lower traveling body 2. The Y direction coincides with the left-right direction of the lower traveling body 2. The +side in the Y direction corresponds to the left side when the front is viewed from the lower traveling body 2. The -side in the Y direction corresponds to the right side when the front is viewed from the lower traveling body 2. The Z direction coincides with the up-down direction of the lower traveling body 2. The +side in the Z direction coincides with the upper side of the lower traveling body 2. The -side in the Z direction corresponds to the lower side of the lower traveling body 2.

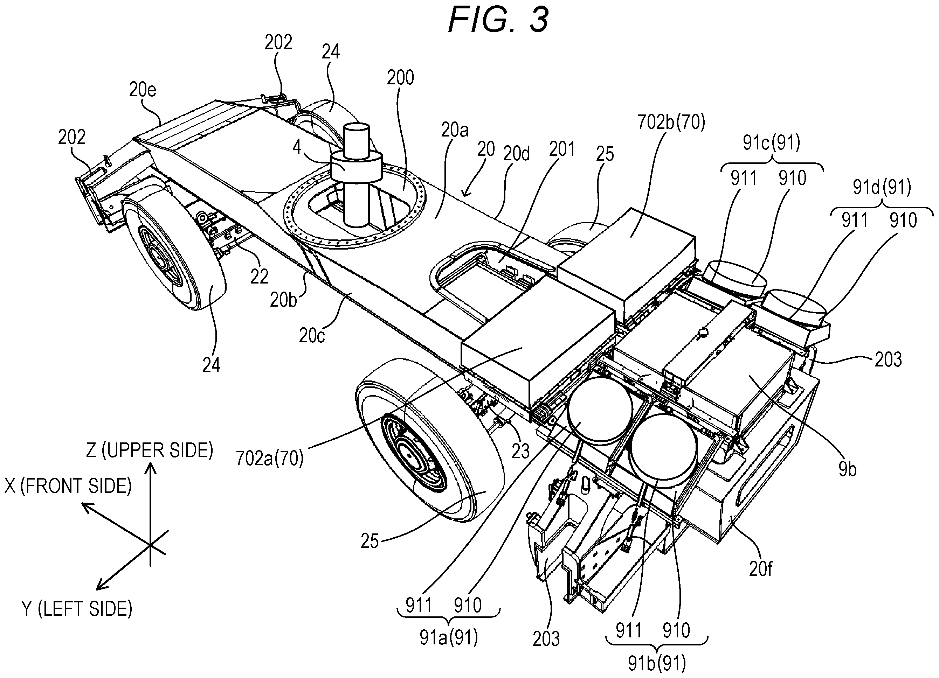

The lower traveling body 2 corresponds to an example of a traveling vehicle body, and can travel by electric power. Specifically, as illustrated in Figs. 1 and 3, the lower traveling body 2 includes a frame 20, a body 21, a front axle 22, a rear axle 23, front tires 24, rear tires 25, and an outrigger 26.

The frame 20 is a box-shaped member extending in the front-rear direction and having a rectangular cross-sectional shape, for example, and constitutes a framework of the lower traveling body 2. The frame 20 includes an upper plate 20a, a lower plate 20b, a left plate 20c, a right plate 20d, a front plate 20e, and a rear plate 20f.

The frame 20 has a slip ring arrangement space 200 formed by a through hole penetrating the frame 20 in the up-down direction. The slip ring arrangement space 200 is provided at a central position between the front axle 22 and the rear axle 23 in the frame 20.

The frame 20 has a battery housing space 201 formed by a through hole penetrating the frame 20 in the up-down direction. The battery housing space 201 is provided in the frame 20 at a position extending from the upper side to the rear end of the rear axle 23. That is, it may be understood that the battery housing space 201 is provided in the rear portion of the frame 20. In the frame 20, a cross-sectional shape of a portion where the battery housing space 201 is formed is a closed cross section configured by a plurality of continuous plate portions. The transverse cross section of the frame 20 means a cross section of the frame 20 cut along the YZ plane.

The position of the battery housing space is not limited to the illustrated case. The battery housing space may be provided in the frame 20 at a position extending from the upper side to the front end of the front axle 22. Also in this case, the battery housing space may be constituted by a through hole penetrating the frame 20 in the up-down direction.

The frame 20 has a pair of front outrigger supports 202 at the front end. The frame 20 has a pair of rear outrigger supports 203 at the rear end.

The body 21 (see Fig. 1) is a member constituting the outer shape of the lower traveling body 2, and is supported by the frame 20.

The front axle 22 is a shaft member extending in the left-right direction, and is supported by a portion of the frame 20 near the front end of the lower plate 20b. The front tires 24 are rotatably supported at both ends of the front axle 22 in the left-right direction.

The rear axle 23 is a shaft member extending in the left-right direction, and is supported by a portion of the frame 20 near the rear end of the lower plate 20b. The rear tires 25 are rotatably supported at both ends of the rear axle 23 in the left-right direction. In the present embodiment, the mobile crane 1 is a so-called biaxial mobile crane including the front axle 22 and the rear axle 23. However, the mobile crane may be a so-called multiaxial mobile crane having three or more axles.

The outrigger 26 includes a pair of front outriggers 26a and a pair of rear outriggers 26b. Each of the pair of front outriggers 26a is supported by the pair of front outrigger supports 202 of the frame 20. Further, each of the pair of rear outriggers 26b is supported by the pair of rear outrigger supports 203 of the frame 20.

The mobile crane 1 includes a transmission member 4 provided between the lower traveling body 2 and the upper turning body 3. Specifically, the transmission member 4 is disposed in the slip ring arrangement space 200 of the frame 20. Such a transmission member 4 is a member for transmitting electric power, fluid (hydraulic oil and/or compressed air), signals, and the like between the lower traveling body 2 and the upper turning body 3 which rotate relatively.

As illustrated in Fig. 2, the mobile crane 1 includes a hydraulic system 5, a low-voltage system 6, and a high-voltage system 7. Hereinafter, configurations of the hydraulic system 5, the low-voltage system 6, and the high-voltage system 7 will be described.

The hydraulic system 5 includes a tank 51, a hydraulic oil supply device 8, a transmission member 4, and a hydraulic device 53. The elements constituting the hydraulic system 5 are connected by a circuit indicated by a thick line in Fig. 2.

The tank 51 and the hydraulic oil supply device 8 are provided in the lower traveling body 2. The hydraulic oil supply device 8 includes an electric motor 80, a speed reducer 81, and a pump 82. The electric motor 80 is driven on the basis of the electric power supplied from a high-voltage battery 70 described later via a lower junction box 71 and an inverter 83.

The rotation of the electric motor 80 is transmitted to the pump 82 via the speed reducer 81. The pump 82 operates based on the rotation transmitted from the electric motor 80. The hydraulic oil supply device 8 supplies the hydraulic oil stored in the tank 51 to the transmission member 4 via the oil passage.

The transmission member 4 constitutes a flow path of fluid (for example, hydraulic oil and/or compressed air) supplied from the lower traveling body 2 to the upper turning body 3 between the lower traveling body 2 and the upper turning body 3 which rotate relatively. Specifically, the transmission member 4 has a function of transmitting the hydraulic oil supplied from the hydraulic oil supply device 8 to the hydraulic device 53 provided in the upper turning body 3.

In the present embodiment, the hydraulic device 53 includes a turning actuator (not illustrated), a derricking cylinder 34, a telescopic cylinder 35, and a winch actuator (not illustrated). The hydraulic oil used in the hydraulic device 53 passes through the transmission member 4 and returns to the tank 51.

Next, the low-voltage system 6 will be described. The low-voltage system 6 includes a lower controller 60, a transmission member 4, an upper controller 61, a DC-DC converter 64, an electric fan 910, first pumps 90a and 90b, and a low-voltage battery 63. The elements constituting the low-voltage system 6 are connected by a circuit indicated by a dotted line in Fig. 2.

The lower controller 60 transmits, for example, a video signal, a detection signal of a sensor, and a control signal to the upper controller 61 via the transmission member 4. The control signal is a signal for controlling the operation of a device (for example, the hydraulic device 53 and the upper electric device 74) provided in the upper turning body 3 to be controlled. Hereinafter, the signals including these signals and transmitted from the lower controller 60 to the upper controller 61 are collectively referred to as lower generation signals. The lower controller 60 operates based on the electric power supplied from the low-voltage battery 63.

The lower controller 60 may be a controller for operating a lower electric device provided in the lower traveling body 2. The lower electric device includes, for example, a DC-DC converter 64, an electric fan 910, a cooling pump 65, and the like. In Fig. 2, a circuit connecting the lower controller 60 and devices other than the transmission member 4 and the low-voltage battery 63 is omitted.

The upper controller 61 transmits the lower generation signal received from the lower controller 60 to a control device that controls the operation of the device provided in the upper turning body 3. The control device is, for example, an electromagnetic valve that controls the operation of the hydraulic device 53 or a controller that controls the operation of the upper electric device 74.

In addition to the lower generation signal, the low-voltage system 6 may transmit, for example, information on the operation of a device provided in the upper turning body 3 and/or a current equal to or lower than a predetermined voltage supplied to the device from the lower traveling body 2 to the upper turning body 3.

The DC-DC converter 64 is connected to the high-voltage battery 70 via the lower junction box 71. The DC-DC converter 64 steps down the voltage of the high-voltage battery 70 and supplies the voltage to the low-voltage battery 63.

The electric fan 910 constitutes a lower cooling system 9 described later. The electric fan 910 operates based on the electric power supplied from the low-voltage battery 63.

The pumps 90a and 90b constitute the lower cooling system 9 described later. The pumps 90a and 90b operate based on the electric power supplied from the low-voltage battery 63.

Next, the high-voltage system 7 will be described. The high-voltage system 7 is a system for executing traveling of the lower traveling body 2 and operations other than traveling (for example, crane operations, cooling, and/or heating) based on the electric power supplied from the high-voltage battery 70. Hereinafter, the configuration of the high-voltage system 7 will be described.

As illustrated in Fig. 2, the high-voltage system 7 includes, as main elements, a high-voltage battery 70, a lower junction box 71, a traveling inverter 72, a traveling motor 73, an electric air compressor 75, an on-board charger 76, a transmission member 4, and an upper electric device 74. The elements constituting the high-voltage system 7 are connected by a circuit indicated by a thin solid line in Fig. 2.

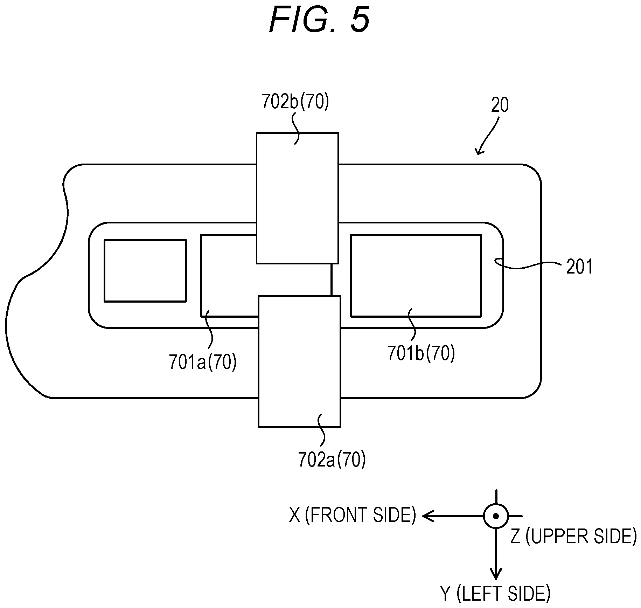

The high-voltage battery 70 corresponds to an example of a power supply unit, and includes a plurality of batteries 701a, 701b, 702a, and 702b as illustrated in Fig. 5. The batteries 701a and 701b are disposed in the battery housing space 201 of the frame 20. As described above, in the case of the present embodiment, since the dead space of the frame 20 can be effectively utilized, the high-voltage battery 70 can be compactly arranged, and damage due to impact or the like of the high-voltage battery 70 can be suppressed. The batteries 702a and 702b are disposed outside the frame 20 and above the batteries 701a and 701b.

The lower junction box 71 is provided in the lower traveling body 2, and is for distributing the electric power supplied from the high-voltage battery 70. The lower junction box 71 is connected to the high-voltage battery 70 and the traveling inverter 72.

The traveling inverter 72 is provided in the lower traveling body 2 and is connected to the traveling motor 73. The traveling inverter 72 adjusts the current received from the lower junction box 71 and sends the adjusted current to the traveling motor 73. The traveling inverter 72 and the traveling motor 73 constitute a traveling drive device 77.

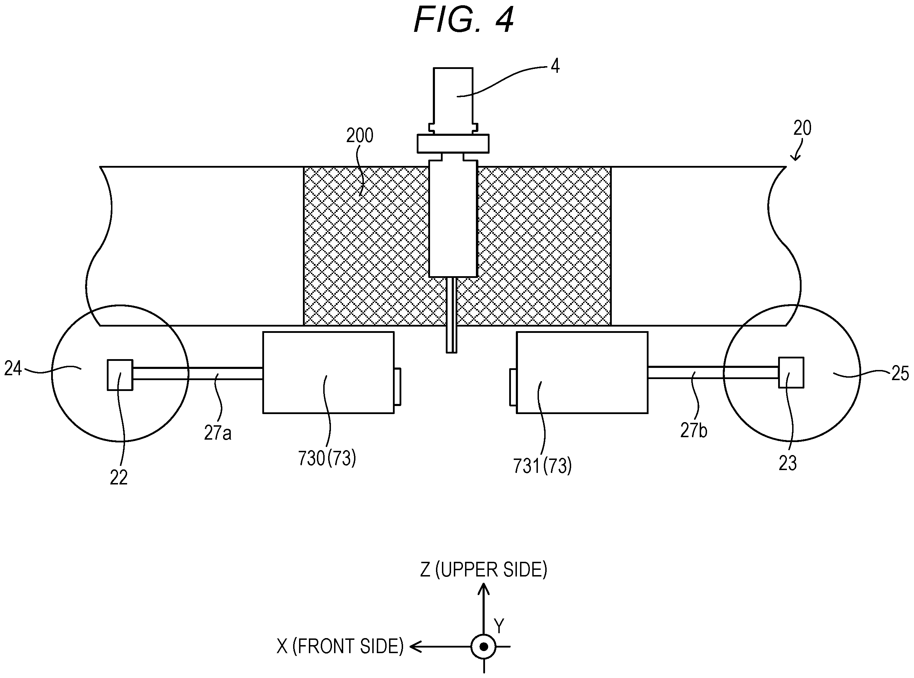

As illustrated in Fig. 4, the traveling motor 73 includes a front traveling motor 730 and a rear traveling motor 731. The front traveling motor 730 and the rear traveling motor 731 are provided below the frame 20 and between the front axle 22 and the rear axle 23.

An output shaft of the front traveling motor 730 is connected to a front driving shaft 27a. The front end of the front driving shaft 27a is connected to the front axle 22 via a gear (for example, a speed reducer).

An output shaft of the rear traveling motor 731 is connected to the rear driving shaft 27b. The rear end of the rear driving shaft 27b is connected to the rear axle 23 via a gear (for example, a speed reducer).

In the case of the present embodiment, the positions of the front traveling motor 730 and the rear traveling motor 731 in the front-rear direction can be adjusted according to the lengths of the front driving shaft 27a and the rear driving shaft 27b. Therefore, the weight balance of the entire mobile crane 1 can be flexibly adjusted according to the specifications of the mobile crane 1.

The front traveling motor 730 and the rear traveling motor 731 as described above are driven on the basis of the electric power supplied from the high-voltage battery 70 under the control of a control unit (not illustrated).

The electric air compressor 75 constitutes a brake system (not illustrated). Such an electric air compressor 75 is driven on the basis of the electric power supplied from the high-voltage battery 70 under the control of a control unit (not illustrated).

The on-board charger 76 constitutes a charging system (not illustrated) for charging the high-voltage battery 70.

Further, the lower junction box 71 is connected to the transmission member 4 as illustrated in Fig. 2. The lower junction box 71 sends the electric power supplied from the high-voltage battery 70 to the transmission member 4.

The transmission member 4 constitutes an electric path of the electric power supplied from the high-voltage battery 70 to the upper electric device 74 between the lower traveling body 2 and upper turning body 3 which rotate relatively.

The upper electric device 74 is a device that is provided in the upper turning body 3 and operates on the basis of the electric power of the high-voltage battery 70. The upper electric device 74 is, for example, a heating compressor provided in the upper turning body 3.

In a case where the turning actuator is an electric motor, the electric motor for turning corresponds to an example of the upper device. In a case where the winch actuator is an electric motor, the electric motor for winching corresponds to an example of the upper device. In this case, the transmission member 4 is connected to the electric motor for turning and the electric motor for winching via an upper junction box (not illustrated). Such an upper junction box has a function of allocating the electric power of the high-voltage battery 70 supplied via the transmission member 4 to the electric motor for turning and the electric motor for winching.

When the electric power of the high-voltage battery 70 is supplied, the electric motor for turning is driven based on the electric power. The electric motor for turning turns the upper turning body 3.

In addition, when the electric power of the high-voltage battery 70 is supplied, the electric motor for winching is driven on the basis of the electric power. The electric motor for winching rotates the winch (not illustrated). As a result, the wire rope 36 is wound up or unwound, and the hook 37 ascends or descends.

The mobile crane 1 of the present embodiment includes a lower cooling system 9 for cooling various devices provided in the lower traveling body 2. Hereinafter, a specific configuration of the lower cooling system 9 will be described.

The lower cooling system 9 includes a first cooling system 9a and a second cooling system 9b.

The first cooling system 9a is a system for cooling a lower electric device mounted on the lower traveling body 2. The lower electric device cooled by the first cooling system 9a includes the traveling inverter 72, the front traveling motor 730, the rear traveling motor 731, the electric air compressor 75, and the on-board charger 76 constituting the high-voltage system 7. The lower electric device cooled by the first cooling system 9a includes, for example, an electric motor 80 and an inverter 83 constituting the hydraulic oil supply device 8. The lower electric device cooled by the first cooling system 9a includes, for example, a DC-DC converter 64 constituting the low-voltage system 6.

Specifically, the first cooling system 9a includes a first pump 90a, a second pump 90b, and a cooling device 91.

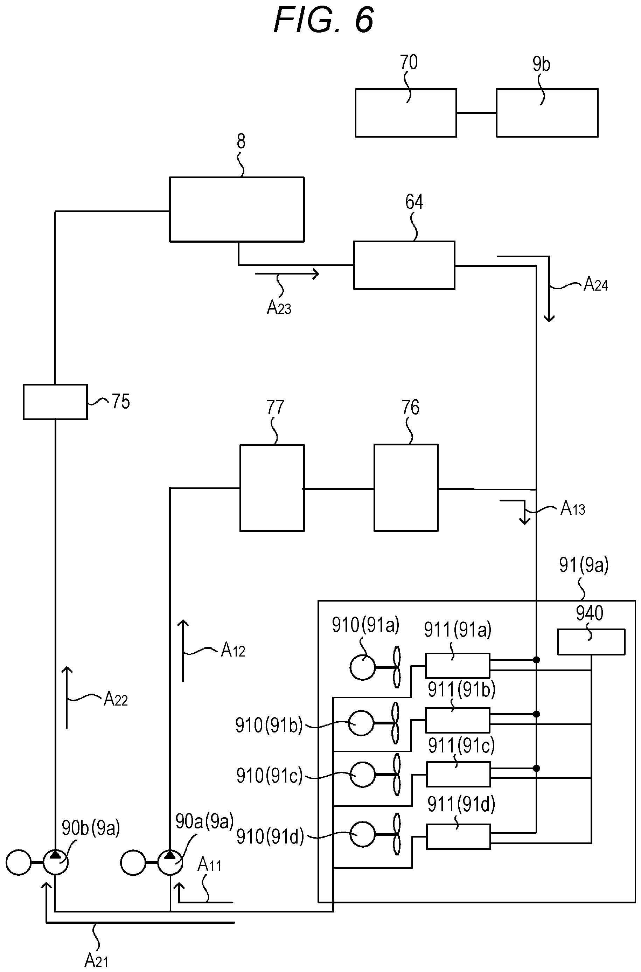

Each of the first pump 90a and the second pump 90b is provided in the lower traveling body 2. As illustrated in Fig. 6, the first pump 90a and the second pump 90b are connected in parallel in the first cooling system 9a. Hereinafter, the cooling circuit through which the cooling liquid discharged from the first pump 90a circulates is referred to as a traveling system cooling circuit (first cooling circuit). A cooling circuit through which the cooling liquid discharged from the second pump 90b circulates is referred to as a work system cooling circuit (second cooling circuit). That is, the traveling system cooling circuit and the work system cooling circuit are provided in parallel in the first cooling system 9a.

The capacities of the first pump 90a and the second pump 90b and the cooling targets (devices) allocated to the traveling system cooling circuit and the work system cooling circuit are determined according to the upper limit of the flow rate of the cooling circuit corresponding to each device, the resistance (pipeline resistance) in the cooling circuit corresponding to each device, the temperature of the cooling liquid necessary for cooling each device, and the like. In the present embodiment, the cooling liquid circulates constantly in the traveling system cooling circuit and the work system cooling circuit.

Note that a cooling circuit for circulating a cooling liquid may be switched according to the state of the mobile crane 1. Specifically, when the mobile crane 1 travels, the cooling liquid may be circulated in the traveling system cooling circuit, and the cooling liquid may not be circulated in the work system cooling circuit. Further, at the time of working of the mobile crane 1, the cooling liquid may be circulated in the traveling system cooling circuit while being circulated in the work system cooling circuit.

The first pump 90a is an electric pump that is driven based on electric power supplied from the low-voltage battery 63, and sends the cooling liquid (for example, coolant) supplied from a cooling device 91 described later to a drive device cooling circuit (not illustrated) for cooling the traveling drive device 77. The cooling liquid flowing into the first pump 90a is cooled by the cooling device 91. The drive device cooling circuit is a cooling circuit for cooling the traveling inverter 72, the front traveling motor 730, and the rear traveling motor 731 constituting the traveling drive device 77.

Specifically, the cooling liquid discharged from the cooling device 91 flows as indicated by arrow A₁₁ in Fig. 6 and flows into the first pump 90a. Next, the cooling liquid flowing out of the first pump 90a flows as indicated by arrow A₁₂ and flows into a drive device cooling circuit (not illustrated). When flowing through the drive device cooling circuit, the cooling liquid cools the traveling inverter 72, the front traveling motor 730, and the rear traveling motor 731 constituting the traveling drive device 77. The cooling liquid flowing out of the drive device cooling circuit flows into a charging system cooling circuit (not illustrated) for cooling the on-board charger 76. The cooling liquid cools the on-board charger 76 when flowing through the charging system cooling circuit. Thereafter, the cooling liquid flowing out of the charging system cooling circuit flows as indicated by arrow A₁₃ in Fig. 6 and flows into the cooling device 91.

The second pump 90b is an electric pump that is driven based on electric power supplied from the low-voltage battery 63, and sends a cooling liquid (for example, coolant) supplied from the cooling device 91 described later to a braking system cooling circuit (not illustrated) for cooling the electric air compressor 75 and a supply device cooling circuit (not illustrated) for cooling the hydraulic oil supply device 8. The supply device cooling circuit is a cooling circuit for cooling the electric motor 80 and the inverter 83 constituting the hydraulic oil supply device 8.

Specifically, the cooling liquid flowing out of the cooling device 91 flows as indicated by arrow A₂₁ in Fig. 6 and flows into the second pump 90b. Next, the cooling liquid flowing out of the second pump 90b flows as indicated by arrow A₂₂ in Fig. 6, and flows into the braking system cooling circuit for cooling the electric air compressor 75. The cooling liquid flowing out of the braking system cooling circuit flows into the supply device cooling circuit (not illustrated) for cooling the hydraulic oil supply device 8. The cooling liquid cools the electric motor 80 and the inverter 83 when flowing through the supply device cooling circuit.

Next, the cooling liquid flowing out of the supply device cooling circuit flows as indicated by arrow A₂₃ in Fig. 6, and flows into a low-voltage system cooling circuit (not illustrated) for cooling the DC-DC converter 64 constituting the low-voltage system 6. The cooling liquid cools the DC-DC converter 64 when flowing through the low-voltage system cooling circuit.

The cooling liquid flowing out of the low-voltage system cooling circuit flows as indicated by arrow A₂₄ in Fig. 6 and flows into the cooling device 91.

The cooling device 91 is a device for cooling a cooling liquid flowing through the first cooling system 9a. The cooling device 91 includes a plurality of cooling devices. Specifically, the cooling device 91 includes a first cooling device 91a, a second cooling device 91b, a third cooling device 91c, and a fourth cooling device 91d.

The first cooling device 91a, the second cooling device 91b, the third cooling device 91c, and the fourth cooling device 91d are dispersedly arranged in the lower traveling body 2 and connected in parallel to each other. Each of the first cooling device 91a, the second cooling device 91b, the third cooling device 91c, and the fourth cooling device 91d cools the cooling liquid flowing through the first cooling system 9a. Note that the number of cooling devices is not limited to the illustrated case.

As illustrated in Fig. 6, the circuits connected to the inlet-side ports of the first cooling device 91a, the second cooling device 91b, the third cooling device 91c, and the fourth cooling device 91d are branched on the upstream side of the first cooling device 91a, the second cooling device 91b, the third cooling device 91c, and the fourth cooling device 91d to form a plurality of circuits (in the present embodiment, four circuits).

As illustrated in Fig. 6, the circuits connected to the outlet-side ports of the first cooling device 91a, the second cooling device 91b, the third cooling device 91c, and the fourth cooling device 91d are merged on the downstream side of the first cooling device 91a, the second cooling device 91b, the third cooling device 91c, and the fourth cooling device 91d to form one circuit.

That is, the cooling liquid flowing through the first cooling system 9a branches on the upstream side of the first cooling device 91a, the second cooling device 91b, the third cooling device 91c, and the fourth cooling device 91d, flows into the first cooling device 91a, the second cooling device 91b, the third cooling device 91c, and the fourth cooling device 91d, is cooled, and then joins to circulate in the first cooling system 9a.

Each of the first cooling device 91a, the second cooling device 91b, the third cooling device 91c, and the fourth cooling device 91d includes an electric fan 910 and a radiator 911. The electric fan 910 is disposed so as to overlap the upper side of the radiator 911. The electric fan 910 operates based on the electric power supplied from the low-voltage battery 63.

In the case of the present embodiment, the first cooling device 91a, the second cooling device 91b, the third cooling device 91c, and the fourth cooling device 91d are dispersedly arranged above the rear end of the frame 20 so as to sandwich the battery housing space 201 of the frame 20.

Specifically, the first cooling device 91a and the second cooling device 91b correspond to an example of a left-side cooling device, and are disposed on the left side of the battery housing space 201 at the rear end of the frame 20. The first cooling device 91a and the second cooling device 91b are arranged side by side in the front-rear direction. The first cooling device 91a is disposed in front of the second cooling device 91b.

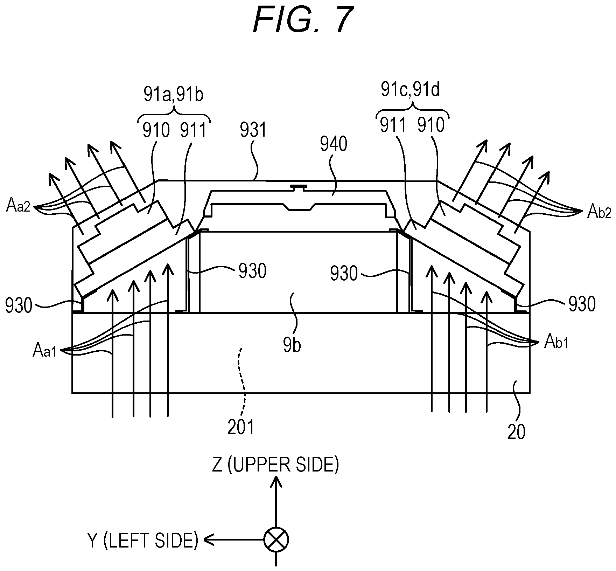

The first cooling device 91a and the second cooling device 91b are disposed to face obliquely upward. Specifically, as illustrated in Fig. 7, the first cooling device 91a and the second cooling device 91b are disposed with their upper surfaces facing obliquely upward to the left. In other words, the first cooling device 91a and the second cooling device 91b are disposed such that an end (right end) on a side close to a top tank 940 described later is higher than an end (left end) on a side far from the top tank 940. In Fig. 7, the first cooling device 91a and the second cooling device 91b are collectively illustrated for convenience. The inclination angles of the first cooling device 91a and the second cooling device 91b with respect to the up-down direction are not limited to the inclination angles illustrated in Fig. 7.

The third cooling device 91c and the fourth cooling device 91d correspond to an example of a right-side cooling device, and are arranged side by side in the front-rear direction on the right side of the battery housing space 201 at the rear end of the frame 20. The third cooling device 91c is disposed in front of the fourth cooling device 91d. The first cooling device 91a and the third cooling device 91c are arranged side by side on the left and right with the battery housing space 201 interposed therebetween. The second cooling device 91b and the fourth cooling device 91d are arranged side by side on the left and right with the battery housing space 201 interposed therebetween.

The third cooling device 91c and the fourth cooling device 91d are disposed to face obliquely upward. Specifically, as illustrated in Fig. 7, the third cooling device 91c and the fourth cooling device 91d are disposed with their upper surfaces facing obliquely upward to the right. In other words, the third cooling device 91c and the fourth cooling device 91d are disposed such that an end (right end) on a side close to the top tank 940 described later is higher than an end (left end) on a side far from the top tank 940. In Fig. 7, the third cooling device 91c and the fourth cooling device 91d are collectively illustrated for convenience. The inclination angles of the third cooling device 91c and the fourth cooling device 91d with respect to the up-down direction are not limited to the inclination angles illustrated in Fig. 7.

Each of the first cooling device 91a, the second cooling device 91b, the third cooling device 91c, and the fourth cooling device 91d is fixed to the upper surface of the rear end of the frame 20 via a mount member 930.

The first cooling device 91a, the second cooling device 91b, the third cooling device 91c, and the fourth cooling device 91d are each covered with a cover 931. The cover 931 also covers the top tank 940 and the second cooling system 9b described later.

The left end of the upper surface of the cover 931 is along the upper surfaces of the first cooling device 91a and the second cooling device 91b, and is inclined so as to face obliquely upward to the left. The right end of the upper surface of the cover 931 is along the upper surfaces of the third cooling device 91c and the fourth cooling device 91d, and is inclined so as to face obliquely upward to the right. Since the right end and the left end of the upper surface of the cover 931 are inclined surfaces as described above, a wide field of view of the worker in the cab 33 in a state where the upper turning body 3 has turned backward is secured.

The first cooling system 9a includes the top tank 940. The top tank 940 corresponds to an example of an air vent tank, and is connected to the first cooling device 91a, the second cooling device 91b, the third cooling device 91c, and the fourth cooling device 91d. The top tank 940 is disposed above the second cooling system 9b described later and between the first cooling device 91a and the second cooling device 91b and the third cooling device 91c and the fourth cooling device 91d.

The top tank 940 is disposed so as to be stretched between the cooling devices (the first cooling device 91a and the second cooling device 91b) disposed on the left side and the cooling devices (the third cooling device 91c and the fourth cooling device 91d) disposed on the right side. When the temperature of the cooling liquid changes and the cooling liquid in the first cooling device 91a, the second cooling device 91b, the third cooling device 91c, and the fourth cooling device 91d expands, the expanded cooling liquid flows into the top tank 940. In this manner, an increase in the pressure of the first cooling system 9a based on the expansion of the cooling liquid is suppressed.

The top tank 940 is disposed at a position higher than other devices (for example, the first cooling device 91a, the second cooling device 91b, the third cooling device 91c, and the fourth cooling device 91d) constituting the first cooling system 9a. Therefore, the air in the first cooling system 9a can be released to the top tank 940. As a result, it is possible to suppress failure of the first cooling system 9a caused by air in the first cooling system 9a.

In particular, in the case of the present embodiment, each of the first cooling device 91a, the second cooling device 91b, the third cooling device 91c, and the fourth cooling device 91d is disposed in an inclined state such that the end on a side close to the top tank 940 is higher than the end on a side far from the top tank 940. Therefore, the air in the first cooling device 91a, the second cooling device 91b, the third cooling device 91c, and the fourth cooling device 91d can be effectively released to the top tank 940. As a result, the failure of the first cooling system 9a can be more effectively suppressed.

The cooling liquid having flowed into the first cooling device 91a, the second cooling device 91b, the third cooling device 91c, and the fourth cooling device 91d flows in the radiator 911 of each of the first cooling device 91a, the second cooling device 91b, the third cooling device 91c, and the fourth cooling device 91d. When the electric fan 910 is operated, air passes through the radiator 911 from the lower side to the upper side. At this time, the air passing through the radiator 911 cools the cooling liquid flowing in the radiator 911.

Specifically, the first cooling device 91a and the second cooling device 91b each suck up air below the frame 20 as indicated by arrow Aₐ₁ in Fig. 7. The air sucked up by the first cooling device 91a and the second cooling device 91b cools the cooling liquid flowing through the radiator 911 of the first cooling device 91a and the second cooling device 91b (that is, after heat exchange), and then is discharged from the first cooling device 91a and the second cooling device 91b as indicated by arrow Aₐ₂ in Fig. 7.

On the other hand, the third cooling device 91c and the fourth cooling device 91d each suck up the air below the frame 20 as indicated by arrow A_{b1} in Fig. 7. The air sucked up by the third cooling device 91c and the fourth cooling device 91d cools the cooling liquid flowing through the radiator 911 of the third cooling device 91c and the fourth cooling device 91d (that is, after heat exchange), and then is discharged from the third cooling device 91c and the fourth cooling device 91d as indicated by arrow A_{b2} in Fig. 7.

In the case of the present embodiment, the first cooling device 91a, the second cooling device 91b, the third cooling device 91c, and the fourth cooling device 91d discharge the air sucked up from below the frame 20 to above the frame 20. Therefore, the noise level below the electric fan 910 of each of the first cooling device 91a, the second cooling device 91b, the third cooling device 91c, and the fourth cooling device 91d can be reduced.

The second cooling system 9b is a system for cooling the first batteries 701a and 701b and the second batteries 702a and 702b constituting the high-voltage battery 70 mounted on the lower traveling body 2. As illustrated in Fig. 6, the second cooling system 9b is a cooling system independent of the first cooling system 9a.

The second cooling system 9b is disposed between the cooling devices (the first cooling device 91a and the second cooling device 91b) disposed above the battery housing space 201 and on the left side in the left-right direction and the cooling devices (the third cooling device 91c and the fourth cooling device 91d) disposed on the right side. In other words, the second cooling system 9b is disposed behind the second batteries 702a and 702b at the rear end of frame 20. Such a second cooling system 9b has a function of maintaining the temperature of the high-voltage battery 70 at a set temperature. A specific structure of the second cooling system 9b will not be described.

### <Supplementary Notes>

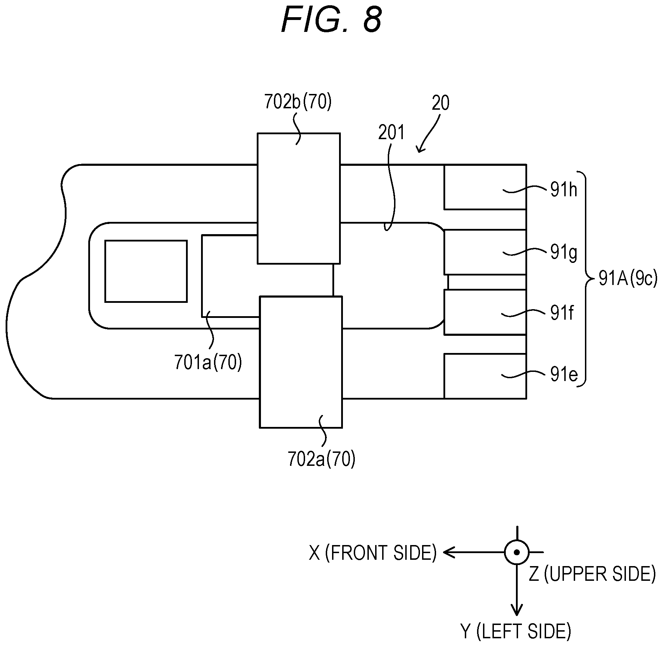

Fig. 8 is a schematic diagram illustrating a modification of the cooling device. A cooling device 91A illustrated in Fig. 8 constitutes a first cooling system 9c, and includes a plurality of cooling devices dispersedly arranged side by side in the left-right direction at the rear end of the frame 20. Specifically, the cooling device 91A includes a first cooling device 91e, a second cooling device 91f, a third cooling device 91g, and a fourth cooling device 91h in this order from the left side. Note that the number of cooling devices is not limited to the illustrated case.

The structures of the first cooling device 91e, the second cooling device 91f, the third cooling device 91g, and the fourth cooling device 91h are similar to the structures of the first cooling device 91a, the second cooling device 91b, the third cooling device 91c, and the fourth cooling device 91d of the cooling device 91 described above. Therefore, regarding the structures of the first cooling device 91e, the second cooling device 91f, the third cooling device 91g, and the fourth cooling device 91h, the description regarding the first cooling device 91a, the second cooling device 91b, the third cooling device 91c, and the fourth cooling device 91d may be appropriately incorporated. Effects and advantages obtained from the configurations of the first cooling device 91e, the second cooling device 91f, the third cooling device 91g, and the fourth cooling device 91h are substantially similar to the operations and effects obtained from the configurations of the first cooling device 91a, the second cooling device 91b, the third cooling device 91c, and the fourth cooling device 91d.

The first cooling device 91e and the second cooling device 91f correspond to the first cooling device 91a and the second cooling device 91b. The third cooling device 91g and the fourth cooling device 91h correspond to the third cooling device 91c and the fourth cooling device 91d.

The first cooling device 91e, the second cooling device 91f, the third cooling device 91g, and the fourth cooling device 91h each are disposed to face obliquely upward. Specifically, the first cooling device 91e, the second cooling device 91f, the third cooling device 91g, and the fourth cooling device 91h each are disposed with the upper surfaces facing obliquely backward and upward. The first cooling device 91e, the second cooling device 91f, the third cooling device 91g, and the fourth cooling device 91h are disposed such that an end close to the top tank (not illustrated) is higher than an end far from the top tank.

The directions in which the upper surfaces of the first cooling device 91e, the second cooling device 91f, the third cooling device 91g, and the fourth cooling device 91h face are not limited to the above-described directions. For example, the first cooling device 91e and the second cooling device 91f may be disposed in a state where the upper surfaces thereof face obliquely upward to the rear left. In addition, the third cooling device 91g and the fourth cooling device 91h may be disposed in a state where the upper surfaces face obliquely upward to the rear right. In a case where the cooling device 91A of such a modification is adopted, the above-described second cooling system 9b may be omitted. In a case where the second cooling system 9b is omitted, the first cooling system 9c cools the high-voltage battery 70.

Alternatively, the first cooling device 91e may be disposed in a state where the upper surface faces obliquely upward to the rear left. In addition, the fourth cooling device 91h may be disposed in a state where the upper surface faces obliquely upward to the rear right. Further, the second cooling device 91f and the third cooling device 91g may be disposed in a state where the upper surfaces face obliquely rearward and upward.

Even in the modification as described above, the first cooling device 91e, the second cooling device 91f, the third cooling device 91g, and the fourth cooling device 91h each may be covered with a cover (not illustrated). Such a cover may have a shape along the upper surfaces of the first cooling device 91e, the second cooling device 91f, the third cooling device 91g, and the fourth cooling device 91h.

### <Effects and Advantages of Present Embodiment>

According to the present embodiment having the above configuration, it is possible to realize the mobile crane 1 capable of traveling based on the electric power of the high-voltage battery 70. In particular, in the case of the present embodiment, since the first cooling device 91a, the second cooling device 91b, the third cooling device 91c, and the fourth cooling device 91d are dispersedly arranged while being obliquely arranged, it is possible to achieve both securing of cooling performance and space saving at a high level. In addition, effects and advantages exhibited by the mobile crane 1 according to the present embodiment are as described above.

This application is based upon and claims the benefit of priority from Japanese Patent Application No. 2022-102121, filed on June 24, 2022, the entire contents of which are incorporated herein by reference.

### Industrial Applicability

The crane according to the present invention is not limited to a rough terrain crane and may be various mobile cranes such as an all-terrain crane, a truck crane, and a loading truck crane (also referred to as a cargo crane).

### Reference Signs List

- 1: mobile crane
- 2: lower traveling body
- 20: frame
- 20a: upper plate
- 20b: lower plate
- 20c: left plate
- 20d: right plate
- 20e: front plate
- 20f: rear plate
- 200: slip ring arrangement space
- 201: battery housing space
- 202: front outrigger support
- 203: rear outrigger support
- 21: body
- 22: front axle
- 23: rear axle
- 24: front tire
- 25: rear tire
- 26: outrigger
- 26a: front outrigger
- 26b: rear outrigger
- 27a: front driving shaft
- 27b: rear driving shaft
- 3: upper turning body
- 31: turning base
- 32: telescopic boom
- 33: cab
- 34: derricking cylinder
- 35: telescopic cylinder
- 36: wire rope
- 37: hook
- 38: winch
- 4: transmission member
- 5: hydraulic system
- 51: tank
- 53: hydraulic device
- 6: low-voltage system
- 60: lower controller
- 61: upper controller
- 63: low-voltage battery
- 64: DC-DC converter
- 65: cooling pump
- 7: high-voltage system
- 70: high-voltage battery
- 701a, 701b: first battery
- 702a, 702b: second battery
- 71: lower junction box
- 72: traveling inverter
- 73: traveling motor
- 730: front traveling motor
- 731: rear traveling motor
- 74: upper electric device
- 75: electric air compressor
- 76: on-board charger
- 77: traveling drive device
- 8: hydraulic oil supply device
- 80: electric motor
- 81: speed reducer
- 82: pump
- 83: inverter
- 9: lower cooling system
- 9a, 9c: first cooling system
- 90a: first pump
- 90b: second pump
- 91, 91A: cooling device
- 91a, 91e: first cooling device
- 91b, 91f: second cooling device
- 91c, 91g: third cooling device
- 91d, 91h: fourth cooling device
- 910: electric fan
- 911: radiator
- 930: mount member
- 931: cover
- 940: top tank
- 9b: second cooling system

## Claims

1. A crane comprising:
a traveling vehicle body that travels with a motor driven by a power supply unit; and
a first cooling system that cools a lower electric device, wherein
the first cooling system includes a plurality of cooling devices dispersedly arranged on the traveling vehicle body, connected in parallel to each other, and configured to cool a fluid flowing through a circuit of the first cooling system.

2. The crane according to claim 1, wherein the fluid branches on an upstream side of the plurality of cooling devices, flows into the plurality of cooling devices, is cooled, and then joins and circulates.

3. The crane according to claim 1, wherein each of the plurality of cooling devices is disposed to face obliquely upward to guide air in the cooling device upward.

4. The crane according to claim 3, wherein the first cooling system further includes an air vent tank provided above the plurality of cooling devices and connected to the plurality of cooling devices.

5. The crane according to claim 1, wherein
the plurality of cooling devices includes a right-side cooling device and a left-side cooling device,
the right-side cooling device discharges air sucked up from below to obliquely upward to right, and
the left-side cooling device discharges air sucked up from below to obliquely upward to left.

6. The crane according to claim 1, further comprising a second cooling system that is a cooling system independent of the first cooling system and cools the power supply unit, wherein
the plurality of cooling devices is dispersedly arranged on left and right sides of the power supply unit, and
the second cooling system is disposed above the power supply unit.

7. The crane according to claim 1, wherein the plurality of cooling devices is arranged in a line in a left-right direction at a rear end of the traveling vehicle body.

8. The crane according to claim 1, wherein
the first cooling system includes a first cooling circuit and a second cooling circuit provided in parallel, and
the first cooling circuit and the second cooling circuit cool the lower electric devices different from each other.

9. The crane according to claim 8, wherein
the first cooling circuit is a circuit for cooling the lower electric device related to traveling of the crane, and
the second cooling circuit is a circuit for cooling the lower electric device related to an operation of the crane.
